# EUROPEAN PATENT SPECIFICATION

(11) **EP 0 449 126 B1**
(45) Date of publication and mention of the grant of the patent: **24.07.1996**
(21) Application number: 91104496.4
(22) Date of filing: 22.03.1991
(51) Int. Cl.: H04N 7/173

(54) **Picture displaying method for audio video system**
Bildwiedergabeverfahren für Ton- und Bildsystem
Procédé d'affichage d'images pour système audio et vidéo

(30) Priority: 26.03.1990 JP 76052/90
(43) Date of publication of application: 02.10.1991
(73) Proprietor: MATSUSHITA ELECTRIC INDUSTRIAL CO., LTD., Kadoma-shi, Osaka-fu, 571 (JP)
(72) Inventor: Goto, Takeshi, Shijonawate-shi, Osaka-fu (JP)
(74) Representative: Eisenführ, Speiser & Partner

(56) References cited:
- EP-A- 0 094 794
- EP-A- 0 158 548
- EP-A- 0 314 572
- DE-A- 3 820 835
- US-A- 4 343 042

## Description

### BACKGROUND OF THE INVENTION

The present invention generally relates to an audio video system with audio video apparatuses such as television, VTR, audio apparatus and so on being connected by a plurality of apparatuses with an information transmission path, and more particularly, to a picture displaying method for the operation of the respective types of functions by the displaying of the various types of functions of the respective stations on the monitor picture face so as to input the demands of the users in accordance with the displays.

Conventionally, when the function displays of all the stations connected with the system, and the displays of the menu picture are effected, the central computer retains all the functions and the picture data all the stations have to effect the integrated controls and processes the displays when demanded.

But the conventional art described hereinabove has the following problems.
(1) As the central computer controls the picture display data of all the stations connected with the system, the data amount to be controlled becomes massive in amount.
(2) As the central computer controls the picture display data of all the stations connected with the system, it is difficult to cope with the picture displays as to the new station when the new station is connected with the system, or when the types are replaced by the new ones even in the existing station.

As a method of solving the above described problems, the Japanese domestic public patent (publication No. JP-A-2146558) is already proposed. The above described patent is partially cited to describe the method.

The patent is characterized in that in a communication system where a controller composed of a control portion, a display portion, an input portion and a communication control portion is connected with a plurality of terminals provided with a communication portion through a common communication path, a means is adapted to control the corresponding terminal by the selection of the control item and the control content displayed on the display portion of the controller as a means for controlling the terminal from the controller. A plurality of types of basic picture faces to be displayed on the display portion are built in within the controller. A plurality of terminals connected with the common communication path respectively retain the picture information necessary for their own control. The picture information which is an object with respect to the data reception from the controller is transmitted to the controller so as to display on the display portion the picture necessary for the controlling on the side of the controller.

But in the method by the above described patent, the following problems remain unsettled.
(1) The controller is required to have the pictures showing the apparatuses previously as the basic pictures, previously expecting the apparatuses which may be connected with the audio video system.
(2) Although the respective terminals have the data to be displayed in the pictures, the controller always has a control right to the picture display as to which terminal picture is displayed in which order, so that the terminal is impossible to display the desired display in its own procedure in accordance with the demand of the user.

### OBJECT AND SUMMARY OF INVENTION

Accordingly, the present invention has been developed with a view to substantially eliminate the above discussed drawbacks inherent in the prior art, and has for its essential object to provide an improved method.

Another important object of the present invention is to provide a completely expandable on screen display displaying system which is capable of equally handling the picture displays of all the apparatuses so as to freely display any picture of any apparatus if the new apparatus is freely connected with or disconnected from the system, or of deciding the procedure to be displayed in their own methods the respective terminals have.

The following means is used for the realization of it.
(1) The method according to the invention comprises a step of making inquiries as to whether the picture display data exists or not with respect to all the stations connected with the information transmission path, a step of storing an address of a station which replies that the picture display data exists, a step of making an inquiry as to the picture contents with respect to the station replying that the picture display data exists, a step of registering the picture contents replied with respect to the inquiry.
(2) An audio video system of an embodiment of invention is composed of a station with picture display functions attached to it, which has a processing step of sending an operand information for specifying the display start from what number of picture of the station B with respect to the station B that retains the corresponding picture from among the other stations connected onto the information transmission path when the user has specified the picture next to the pictures being displayed at present, and also, a picture display transfer notification ("BRANCH notification") for taking over the picture display control right, and a station with picture display functions attached to it, which has a step of obtaining a control right of the picture display when the "BRANCH notification" has been received from the station A to display first the picture of the picture numeral specified with the operand of the "BRANCH notification", thereafter completing all the picture displays in accordance with the demand from the user after the displaying operation of the pictures demanded by the user.
(3) An audio video system of a further embodiment of the invention is composed of a station with picture display functions attached to it, which has a processing step of sending the operand information for specifying the display start from what number of picture of the station B with respect to the station B that retains the corresponding picture from among the other stations connected onto the information transmission path after the picture numeral being displayed at present has been shunted into the picture numeral shunt means when the user has been specified a picture next to the picture being displayed at present, and a picture display transfer notification "CALL notification" for taking over the picture display control right, and a step of returning the picture numeral from the picture numeral shunt means to the picture numeral accommodating region so as to display the previous picture at a stage where a "RETURN notification" of notifying that the picture display control right from the station B will return to the station A has been received, and a station with picture display functions attached to it, which has a step of retaining the control right of the picture display, when the "CALL notification" from the station A has been received, so as to, first, display the picture of the picture numeral specified with the operand of the "CALL notification", thereafter sending the "RETURN notification" to the station A when the picture display the station B retains has been completed after the picture to be demanded by the user was displayed so as to return the control right of the picture display.
(4) An audio video system of a further embodiment of the invention is composed of an information transmission path of one system for the data communication, a picture display means common to all the stations connected with the information transmission path, a demand input means common to all the stations connected with the information transmission path, a communication processing means connected with the transmission communication system to be composed of a plurality of stations connected with the information transmission path so as to effect the data communication with sequential frames through the information transmission path, a frame decoding means for decoding the contents of the frame received by the communication processing means, a frame generating means for constructing a frame to be sent into the information transmission path by the communication processing means, a central processing apparatus for processing all the processing steps by a software, a memory apparatus to be used when a program of the processing steps by the software is executed, an information displaying means for displaying the information on the picture, a picture data accommodating means for accommodating the various types of information to be displayed on the picture, a display picture numeral accommodating means for accommodating the picture numerals of the pictures to be displayed, an input means for inputting the information for the specification of the next operation and so on by the user, an address accommodating means for accommodating the addresses of the other stations connected with the information transmission path when necessary.

The processing steps comprises a decision step 1 of deciding whether the processing program is started by the demand from within the self-station or by the picture transfer from the other station when it has been started, a step of accommodating into the picture numeral accommodating means the contents of the operand transferred from the other station when the starting operation has been effected by the picture transfer from the other station at the decision step 1, a step of displaying the pictures corresponding to the picture numerals which are accommodated in the picture numeral accommodating means, a step of waiting until the demand for the next processing is inputted, a decision step 2 of deciding whether or not the demand for the next processing is a picture display completion demand when it has been inputted, a decision step 3 of deciding whether or not the next picture to be displayed is a picture existing within the self-station when it has been judged that the completion demand cannot be effected at the decision step 2, a decision step 4 of deciding whether or not a demanded picture exists within the other station connected with the information transmission path when it has been judged that it does not exist within the self-station at the decision step 3, a decision step 5 of deciding whether the transfer of the picture display processing with respect to the corresponding station is effected with "CALL" or "BRANCH" so as to display the demanded picture when it has been judged that the picture demanded at the decision step exists, a step of comparing the picture numerals being displayed at present with the picture numeral shunt means when it has been judged that it is effected with the "CALL" at the decision step 5, a step of erasing the picture being displayed at present, a step of transferring the "CALL notification" which has the picture numeral to be displayed at first as the operand with respect to a station for transferring the display processing of the picture to be displayed next, a step of waiting for the reception of the "RETURN notification" which means the returning of a right of the picture display processing again from the station after the right of the picture display processing has been delivered to the other station with the "CALL notification", a step of returning to a step of restoring the picture numeral which has been shunted at the picture numeral shunt means to the picture numeral accommodating means when the "RETURN notification" has been received so as to display the corresponding picture to the picture numeral, a decision step 7 of deciding whether or not the condition is in the "CALL" from the other station when it has been decided that the demand inputted at the decision step 2 is the picture display completion demand, a step of transferring the "RETURN notification" to the station calling when it has been judged that the condition is in the "CALL" at the decision step 7 so as to complete the processing, a step of erasing the picture being displayed at present when it has been decided that the condition is not in the "CALL" at the decision step 7 so as to complete the processing, a decision step 6 of deciding whether or not the picture demand exists when it has been judged that it exists within the self-station at the decision step 3, a step of returning to a step of accommodating the corresponding picture numeral in the picture numeral accommodating means when it has been judged that it exists at the decision step 6 to display the picture corresponding to the picture numeral, a step of accommodating in the picture numeral accommodating means the picture numeral of the picture displaying to the effect that the picture demanded is impossible to display when it has been judged that the corresponding picture at the decision step 6 does not exist so as to display the picture corresponding to the picture numeral, a step of returning to a step of accommodating in the picture numeral accommodating means the picture numeral of the picture for displaying to the effect that the picture demanded is impossible to display when the picture demanded at the decisions step 4 does not exist even within any station connected with the information transmission path so as to display the picture corresponding to the picture numeral, a step of erasing the picture being displayed at present when it has been judged that it is effected with the "BRANCH" at the decision step 5, and a step of transferring the "BRANCH notification" having as the operand the picture numeral to be displayed at first with respect to the station for delivering the display processing of the picture to be displayed next.

It is possible to realize the following functions by the use of the above described means.
(1) By the adoption of the present invention in the claim 1, it becomes possible to retrieve the previous items of the display pictures all the stations which are connected with the information transmission path retain, and the retrieved results may be used for the processing for deciding whether or not the picture of the item required by the user exists by the registration of the retrieved results in the picture item control means.
(2) By the adoption of the embodiment in the claim 2, it becomes possible to deliver the control right of the picture display to a station having the picture, when a demand for displaying the picture which does not exist in the self-station has been received, so as to display the specified picture.
(3) By the adoption of the embodiment in the claim 3, it becomes possible to temporarily deliver the control right of the picture display to the station having the picture, when a picture which does not exist in the self-station has been demanded to be displayed, so as to restore the control right of the picture display to the self-station again after the picture display processing operation to be desired has been effected by the user.
(4) By the adoption of the embodiment in the claim 4, it becomes possible to provide a picture displaying method capable of effecting the free displaying without any consideration by the user as to whether or not the picture demanded by the user is controlled by which station in a system composed of a plurality of stations connected by the information transmission path.

Also, as each station retains only the picture related to functions it has, and it is possible to display the picture desired by the user simply by the transferring of the display to the station in the picture displayed related to the other station, thus making it possible to effect the dispersion control of the pictures. Therefore, it becomes possible to provide a picture displaying apparatus rich in the expansion property.

### BRIEF DESCRIPTION OF THE DRAWING

These and other objects and features of the present invention will become apparent from the following description taken in conjunction with the preferred embodiment thereof with reference to the accompanying drawings, in which;
Fig. 1 is a block diagram showing the construction of an audio video system in an embodiment of the present invention;
Fig. 2 is a block diagram showing the construction of a station in the embodiment;
Fig. 3 is a processing flow chart to be used for the description of the invention in the claim 1;
Fig. 4 is a conception diagram of a picture transferring method to be used for the description of the claim 2 and embodiments in claim 3, and a picture transfer notification fame block diagram thereof;
Fig. 5 is a processing flow chart to be used for the description of the embodiment in claim 4;
Fig. 6 is a block diagram showing the basic construction of the audio video system to which the present invention has been applied; and
Fig. 7 is a frame block diagram to be used in the communication system to which the present invention is applied.

### DETAILED DESCRIPTION

Before the description of the present invention proceeds, it is to be noted that like parts are designated by like reference numerals throughout the accompanying drawings.

One embodiment of the present invention will be described hereinafter in detail in accordance with the drawings.

### (1) Summary Description of the System:

### (1. 1) Definition:

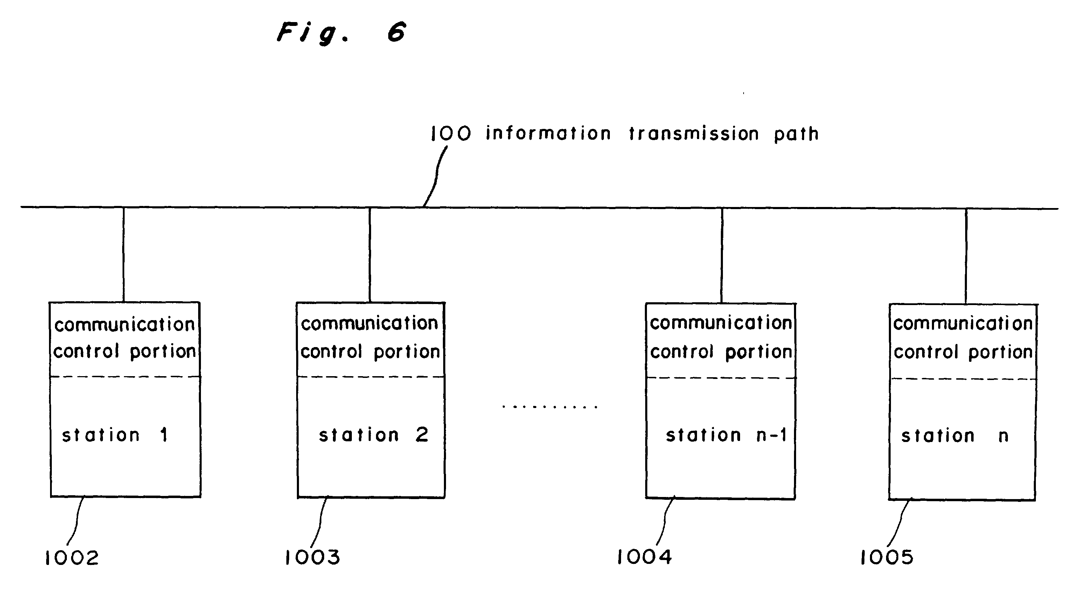

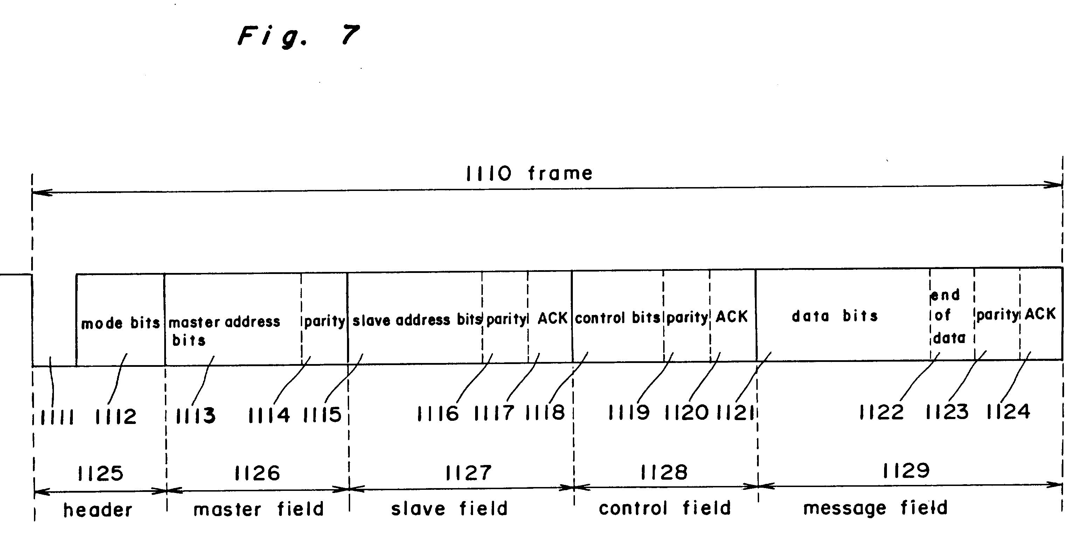

A system to be described here is an audio video system with the audio video apparatuses being mainly composed as a station. This audio video system is composed of a group of audio video apparatuses connected mutually with the communication system provided with transmission property and code independence property. The information is transmitted as variable length units called frames. A physical mechanism for transmitting, receiving the information is called a communication control apparatus (which is called a communication control portion when it is built in within the audio video appliance). The communication circuit which carries the information from a certain communication control apparatus to the other communication control apparatus is called an information transmission path. The basic terminology which helps the understanding of the present specification in the following portions will be briefly described with reference to Fig. 6 and Fig. 7.
* Station 1002 through 1005: Apparatuses which are connected with an information transmission path 1001 and have data communication functions with the other stations.
* Master: A station which has a control right of the communication system.
* Slave: Stations which are specified by their master and are responsible for the master so as to make responses.
* Transmitter: A station which is adapted to transmit the data placed within the message field in a frame.
* Receiver: A station which is adapted to receive the data placed within the message field within a frame.
* Write Sequence: A sequence where the master becomes a transmitter, the commands and data are transmitted with respect to the slaves. There are two types, namely, a write command sequence and a write data sequence.
* Read Sequence: A sequence where the master becomes a receiver so as to collect the data from the slaves.
* Frame 1110: A unit of the information which is transferred from a certain station to the other stations. It is composed of a header field, a master field, a slave field, a control field, a message field.
* Command Frame: A frame having the contents of the message field composed of commands.
* Data Frame: A frame having the contents of the message field composed of data.
* Command: A data code string to be transferred by the command frame, with the processing contents to be executed by a station which has received it being defined unificatively throughout the whole system. On the other hand, the processing contents to be executed by a station which has received it depend upon the received station.
* Mode Bit 1112: It distinguishes the transfer speeds of a frame and the transferable byte numeral of the messages.
* Header Field 1125: A region where the distinction between the start instructions of the frame and the mode of the frame is effected.
* Master Field 1126: A region for presenting the address of the master.
* Slave Field 1127: It is a region for presenting the address of the slave, and is specified by the master.
* Control Field 1128: It is a region where the transmission direction of the message field in the frame, the signification of the contents described in the message field and the lock controlling are effected.
* Message Field 1129: It is a data region for transmitting the message. In this region, a plurality of blocks may be transferred continuously with the data bit 1121 of eight bits, the end of data bit 1122 of one bit, a parity bit 1123 of one bit, the ACK bit 1124 of one bit provided as one block.
* Arbitration: Collision controlling for deciding a priority right when a plurality of stations have tried the transmission start of the frame at the same time. It is executed in a period of a header field 1125 and a master field 1126.
* Lock Control: A function a master specifies with respect to the slave. The slave receives no longer the frame of the such contents as to change the condition of the slave from the other master during a period before the lock is disengaged from once the salve is locked.

### (1. 2) Basic Construction of the System:

Fig. 6 shows a basic construction of an audio video system to which the present invention has been applied. The information transmission path 1001 of one system has a plurality of stations 1002, 1003, ..., 1005, provided with the communication control portions, connected mutually with it. Each station has audio video apparatuses such as VTR, TV, CD players and so on provided as the centers. The stations except for the audio video appliances such as telecontrol apparatuses and so on for controlling the audio video system may be connected. Also, there is no central control apparatus for concentratedly controlling the whole operations in the system.

### (1. 3) Frame Form and Basic Communication Procedure:

In the embodiment of the present invention, the international standard defined in the document "84 (secretariat) 86 I, II Draft - Domestic Digital Bus" (hereinafter referred to as Document 1) issued by the "International electrotechnical Commission" is applied as one example. The frame form and the basic communication procedure defined in the international standard will be described in this paragraph. The construction of the frame is shown in Fig. 7. The frame is composed of a header 1125, a master field 1126, a slave field 1127, a control field 1128, a message field 1129. The header 1125 is composed of a start bit 1111 showing the start of the frame, a mode bit 1112 for the mode transfer. The master field 1126 is composed of a master address bit 1113 of twelve bits, a parity bit 1114 of one bit. The slave field 1127 is composed of a salve address bit 1115 of twelve bits, a parity bit of one bit and an ACK bit 1117 of one bit. When a station specified to a slave exists, an affirmative response is to be returned to the master with the ACK bit 1117 of the salve field.

The composing method of a master address bit 1113 and a slave address bit 1115 is common, with the most significant four bits being of a service type, the medium three bits being of a device type, the least significant three bits being of a device numeral. In the document 1, only the 〈AVC service〉 is defined as a service type, the value thereof being "0001". The device type has the type of the various AV apparatuses assigned to it, with the partial portion of the assignments being shown in Table 1.

**Table 1**

| Device Type | |
|---|---|
| 00000 | VIDEO MONITOR |
| 00001 | AUDIO AMPLIFIER |
| 00010 | SWITCH BOX |
| 00011 | not defined |
| 00100 | VIDEO TAPE RECORDER |
| 00101 | VIDEO TUNING SYSTEM |
| 00110 | VIDEO DISK PLAYER |
| 00111 | CAMERA |
| " | |
| " | |

The device numerals distinguish them when the same device type exists by plurality in the same communication system. Generally, the device numerals are assigned sequentially from the "000".

The master is the ACK bit 1117, and continuously transmits the control field 1128 and its subsequent when the affirmative response has been received. When the negative response has been received, the master suspends its transfer of the frame. The control field 1128 is composed of the control bit 1118 of four bits, the parity bit 1119 of one bit, and the ACK bit 1120 of one bit. The control bit 1118 is a region where the transmission direction of the message field 1129 in the frame, the significance of the contents described in the message field, and the lock controlling are effected. The contents of the control field is shown in Table 2.

**Table 2**

| HEX | contents of CF | lock func. |
|---|---|---|
| 0 | read slave status | not locked |
| 1 | not defined | |
| 2 | read slave status | lock |
| 3 | read data | lock |
| 4 | read lock address (M, L) | not locked |
| 5 | read lock address (H) | not locked |
| 6 | read slave status | unlock |
| 7 | read data | unlock |
| 8 | write memory address | lock |
| 9 | not defined | |
| A | write command | lock |
| B | write data | lock |
| C | not defined | |
| D | not defined | |
| E | write commad | unlock |
| F | write data | unlock |

The salve returns the affirmative response to the master with the ACK bit 1120 when the control of the contents specified with the control bit 1118 can be accepted, and returns the negative response when the it cannot be accepted. The master advances into the region of the message field 1129 when the affirmative response has been received with the ACK bit 1120. When negative response has been received, the master suspends the transfer of the frame. The message field 1129 is composed of a plurality of blocks collected, the block thereof being composed of the data bit 1121 of eight bits, the end of data bit 1122 of one bit showing the final data bit of the message field, a parity bit 1123 of one bit and the ACk bit 1124 of one bit. The station specified as the receiver with the control bit 1118 returns to the transmitter the affirmative response or the negative response with the ACK bit 1124 every time the data bit 1124 is received by one byte. The transmitter which has received the negative response suspends the transmission of the message field there.

In the system, all the stations 1002 through 1005 have a right to becoming a master, and can control the transmission start of the frame 1110 and the control of the transmission timing through the specification of the slave. Although all the stations 1002 through 1005 become masters and have a right for starting the transmission of the frame 1110, at the same time only one master can occupy the information transmission path 1001 starting the transmission of the frame 1110. Therefore, when a plurality of masters effected the transmission of the frames at the same time, it is necessary to decide the priority by the arbitration. The slave has a duty to return a response 1117 with respect to the master at one station specified with the slave bit 1115 within the slave field 1127 of the frame 1110 transmitted by the master. The distinction between the transmitter and the receiver is defined by the control field 1128 within the frame 1110. From a standpoint of one station, four types of (a) master transmitter, (b) master receiver, (c) slave transmitter, (d) slave receiver may be considered possible in the transmission of a frame 1110.

### (2) Detailed Description of the Present Invention in the Claim 1:

A picture displaying method in the audio video system of the present invention in the claim 1 will be described hereinafter.

### (2. 1) Construction of the Embodiment:

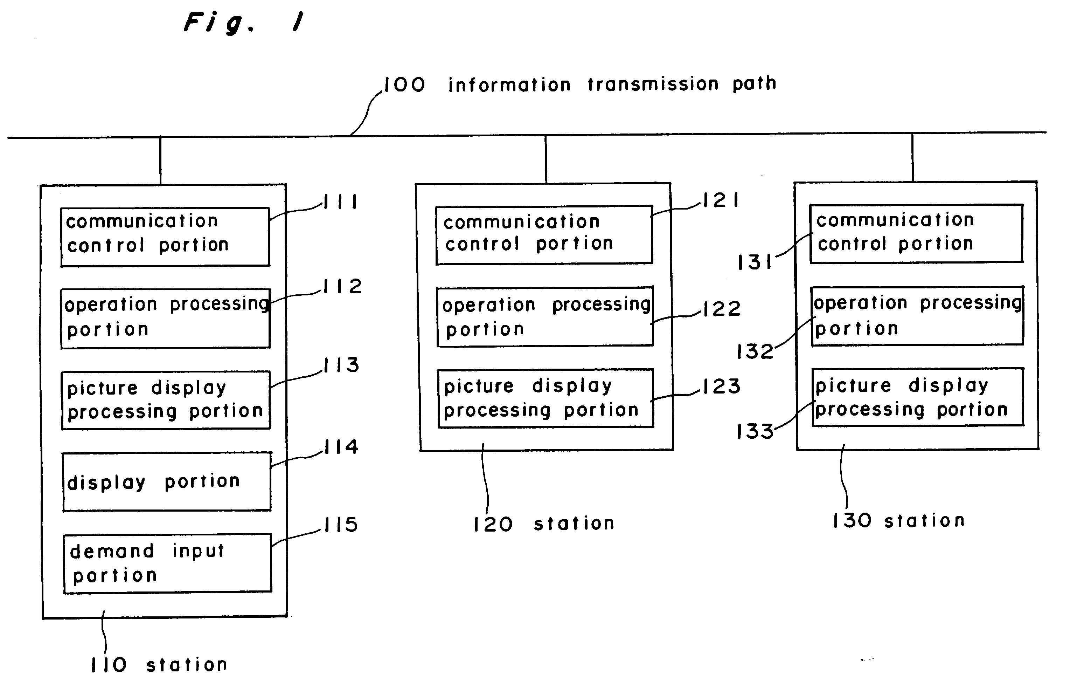

Fig. 1 shows the block diagram of an AV system to which the present invention is applied. Reference numeral 100 is an information transmission path which is connected with the respective stations for constructing the AV system so as to effect the transmission of the information. Reference numeral 110 is a station having a picture display portion (monitor), reference numerals 120, 130, ... are stations which does not have the picture display portions. Reference numerals 111, 121, 131, ... are communication control portions for effecting communication by way of the information transmission path 100, reference numerals 112, 122, 132, ... are operation processing portions for effecting software processing and so on, reference numerals 113, 123, 133, ... are picture display processing portions for effecting the data control and so on of the picture display, reference numeral 114 is a display portion for displaying on the picture plane in accordance with the picture data fed from the picture display processing portions 113, 123, 133, ..., reference numeral 115 is a demand input portion for inputting the demand as to the picture display from the user.

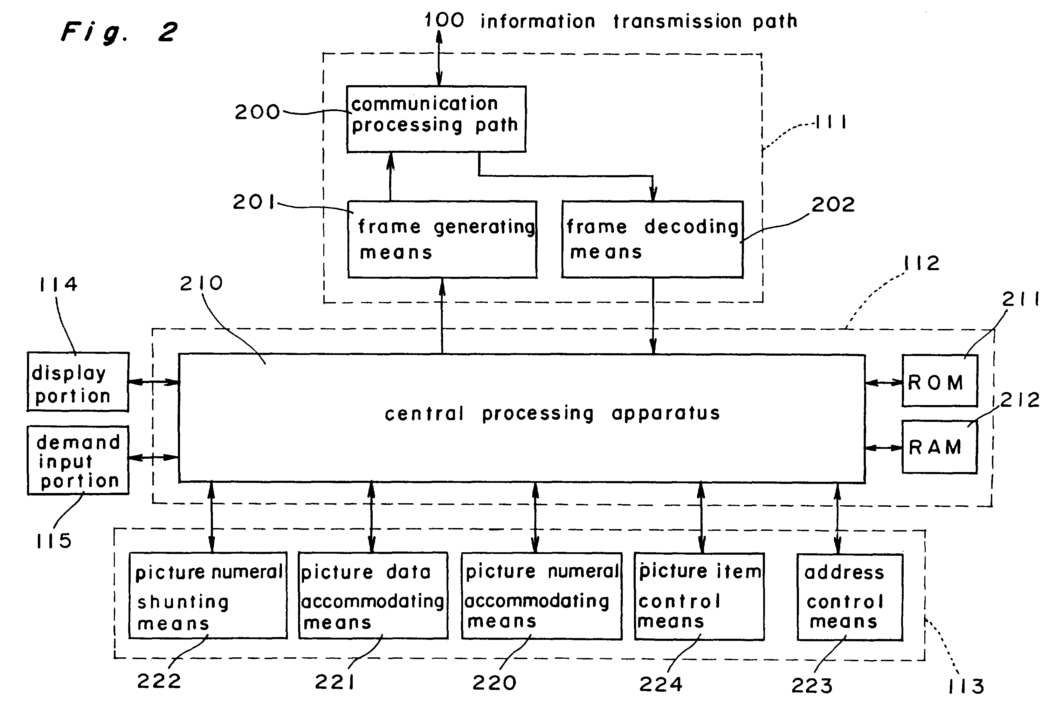

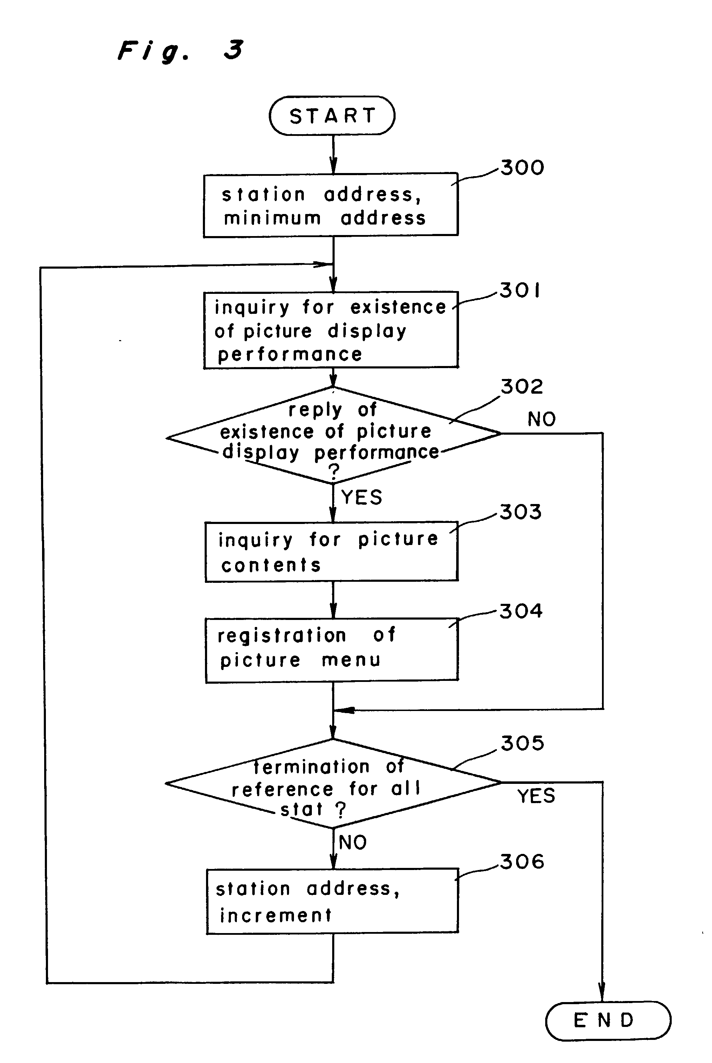

Fig. 2 is a block diagram of a station to which the present invention is applied. Reference numeral 111 is a communication processing means for effecting electric physical control for the data communication with the other stations by way of the information transmission path 100, reference numeral 201 is a frame generating means for generating a frame of a form necessary for sending the data to the information transmission path 100 by way of the communication processing means 200, reference numeral 202 is a frame decoding means for decoding a frame received by way of the communication processing means 200 from the information transmission path 100. Reference numeral 112 is an operation procurement portion, reference numeral 210 is a central processing apparatus (microprocessor) for executing the program of the processing step, reference numeral 211 is a reading exclusive memory (ROM) for accommodating the program, reference numeral 212 is a read, write memory (RAM) for accommodating the various types of data when the processing step is processed. Reference numeral 113 is a picture display processing portion, reference numeral 220 is a picture numeral accommodating means for accommodating numerals of the picture being displayed at present, reference numeral 221 is a picture data accommodating means for accommodating the information of the picture to be displayed, reference numeral 222 is a picture numeral shunting means for accommodating the picture numerals of the pictured displayed last when the picture of the other station is called, reference numeral 223 is an address control means for accommodating the result investigated as to which station connected with the information transmission path has a picture display function, reference numeral 224 is a picture item control means for accommodating the item of the picture having the other station. Fig. 3 is a processing flow chart of a program to be executed by the central processing apparatus 210 in the present embodiment.

### (2. 2) Operation Description of the Embodiment in the Claim 1:

The operation of the present embodiment will be described in detail with reference to the processing flow chart of Fig. 3. The program of the processing contents to be described hereinafter is accommodated in the ROM211 of Fig. 2, with the processing being effected with the use of the RAM212, the address control means 223, and the picture item control means 224 by the central processing apparatus 210.

The processing routine shown in Fig. 3 is executed in a case where the main power supply of the self-station has been put to work and the station has been connected newly with the information transmission path 100.

At the step 300 which is the first step, the minimum address that is stipulated in the other station address of the frame to be sent onto the information transmission path 100 is accommodated. This is an initializing processing for sending the inquiry frame with respect to all the stations connected with the information transmission path 100.

At the step 301, the frame of the inquiry about the absence, existence of the picture display performance is sent out with respect to the station of the other address already set. In order to send out the frame, a frame of a form which generates a corresponding command by the central processing apparatus 210, transfers it to the frame generating means 201, sends out it onto the information transmission path 100 is constructed. The frame generated by the frame generating means 201 is transferred to the communication processing means 200, where the electric physical conditions are converted into adaptability of the provisions, and is sent out onto the information transmission path 100. Although the processings by the frame generating means 201 and the communication processing means 200 are effected in the order of all the above described description when the frame is sent out onto the information transmission path 100, the description is omitted at the following steps so as to avoid the repetition.

The inquiry about the absence, existence of the picture display performance is provided to confirm whether or not the other station which becomes an object retains the picture data for effecting some picture display.

At the step 302, a reply received with respect to the inquiry about the picture display performance absence, existence sent out at the step 301 is analyzed so as to decide whether or not the station which has become an object retains the picture data for the picture display. As a result, when it has been judged that the picture display performance is provided, the step advances to a step 303 with the address of the station which has become an object being accommodated in the address control means 223. When it has been decided that the picture display performance is not provided, the skipping operation is effected down to the step 305.

At the step 304, the picture numeral and the picture title replied to the picture contents inquiry frame sent out at the step 303 are made to correspond to the address of the other station so as to accommodate them in the picture item control means 224. By the execution of the step, a table of contents is made to show which picture the station that has become an object has. The picture items demanded at the step 304 and the step 303 may be detailed enough to judge which picture numeral may be selected when the picture of the station is accessed from the other station.

At the step 305, it is decided whether or not the processing of the step from the step 301 has been executed with respect to all the stations. Unless it has not been executed with respect to all the stations, the step advances to the step 306. If it has been executed, the present processing routine is completed.

At the step 306, the address of the station which is a processing object is provided +1 to advance to the step step 301 and executes the respective steps described hereinabove with respect to the next station.

### (3) Detailed Description of the embodiment in Claim 2

The audio video system picture displaying method of the present invention in the claim 2 will be described hereinafter.

### (3. 1) Construction of Embodiment

As the construction of the embodiment of the present invention in the claim 2 is similar to that of the embodiment of the present invention in the claim 1, the description thereof will be omitted.

### (3. 2) Operation Description of the Embodiment in the Claim 2

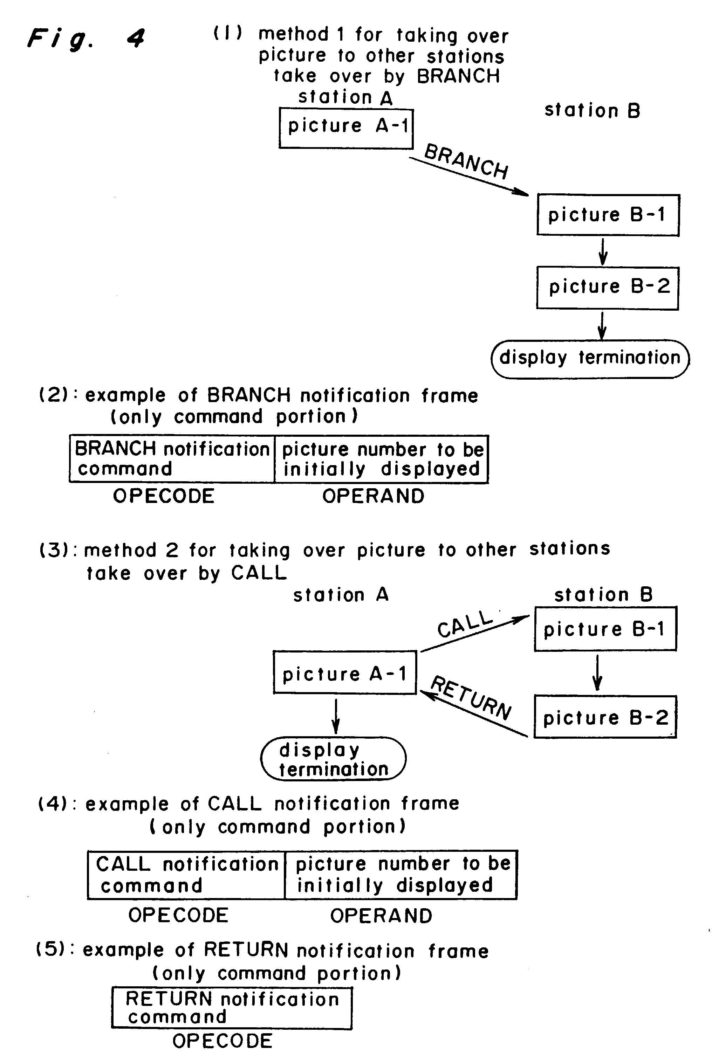

The present embodiment will be described in detail with reference to Fig. 4 (1) and (2). The picture display method in the present embodiment is an invention of providing a method of taking over the control right of the picture displaying to the other station from a certain station. The present embodiment shows a take over method in a case where the picture control right is not required to be restored to the self-station again after the control right of the picture display has been taken over to the other station. The take-over method in a case where the control right is required to be restored again to the station which has a control right of the picture display at the beginning will be described in the present invention in the claim 3.

Assume that a station having a control right of the picture display at present is a station A, and a station which takes over a control right of the picture display next will be a station B. The picture A - 1 of the station A is displayed as shown in Fig. 4 (1) at present. As an instruction input is provided as the user displays the picture B - 1 from the demand input means 115 at this time, the processing of changing the display onto the picture B - 1 is executed as described hereinafter. The central processing apparatus 20 of the station A retrieves the picture B - 1 the user desires from the picture item control means 224 and retrieves from the address control means 223 the address (in this case, the address of the station B) of the station retaining the picture when the corresponding picture exists. In the central processing apparatus 210 of the station A, the address of the station B is made the other address so as to constitute a "BRANCH notification" frame of the contents shown in Fig. 4 (2) in the command portion. In Fig. 4 (2), the "BRANCH notification" command is accommodated in the operation code portion of the notification frame, and the picture numeral of the picture to be displayed first by the station which has taken over the control right of the picture processing is accommodated in the operand portion.

By the execution of the above described processings, the control right of the picture display is taken over to the station B, and thereafter, the processings continue in accordance with the picture contents of the station B.

### (4) Detailed Description of the embodiment in Claim 3

The audio video system picture displaying method of the present invention in the claim 3 will be described hereinafter.

### (4. 1) Construction of the Embodiment

As the construction of the present embodiment is similar to that of the embodiment of the present invention in the claim 1, the description will be omitted.

### (4. 2) Operation Description of the Embodiment in the Claim 3

The present embodiment will be described in detail with reference to Fig. 4 (3), (4), and (5). The embodiment provides a method of taking over a control right of the picture display to the other station from a certain station.

The present embodiment is a take-over method in a case where the picture control right is required to be restored to the self-station again after the control right of the picture display has been taken over to the other station.

Assume that a station having a control right of the picture display at present is a station A, and a station which takes over a control right of the picture display next is a station B. The picture A - 1 of the station is displayed as shown in Fig. 4 (3) at present. As an instruction input is provided as the user displays the picture B - 1 from the demand input means 115 at this time, the processing of changing the display onto the picture B - 1 is executed as described hereinafter. First, the central processing apparatus 210 of the station A shunts to the picture numeral shunting means 222 the picture numeral of the self-station in the display at present. Then, the central processing apparatus 20 of the station A retrieves the picture B - 1 the user desires from the picture item control means 224 and retrieves from the address control means 223 the address (in this case, the address of the station B) of the station retaining the picture when the picture exists. In the central processing apparatus A of the station A, the address of the station B is made the other address so as to constitute a "CALL notification" frame of the contents shown in Fig. 4 (4) in the command portion. In Fig. 4 (4), the "CALL notification" command is accommodated in the operation code portion of the notification frame, and the picture numeral of the picture to be displayed first by the station which has taken over the control right of the picture processing is accommodated in the operand portion. By the execution of the above described processings, the control right of the picture display is taken over to the station B, and thereafter, the processings continue in accordance with the picture contents of the station B.

Then, when the picture display processing by the control of the station B has been completed, or when the picture is required to be returned to the picture of the station A by the demand of the user, the central processing apparatus 210 of the station B transfers the "RETURN notification" shown in Fig. 4 (5) with respect to the station A calling the self-station a while ago. The station A which has received the "RETURN notification" displays again the picture (picture A - 1) displayed before calling the station B and waits for the next demand from the user.

### (5) Detailed Description of the embodiment in the Claim 4

The audio video system picture displaying method of the present invention in the claim 4 will be described hereinafter.

### (5. 1) Construction of the Embodiment

As the construction of the present embodiment is similar to that of the embodiment of the present invention in the claim 1, the description thereof will be omitted.

### (5. 2) Operation Description in the Embodiment in the Claim 4

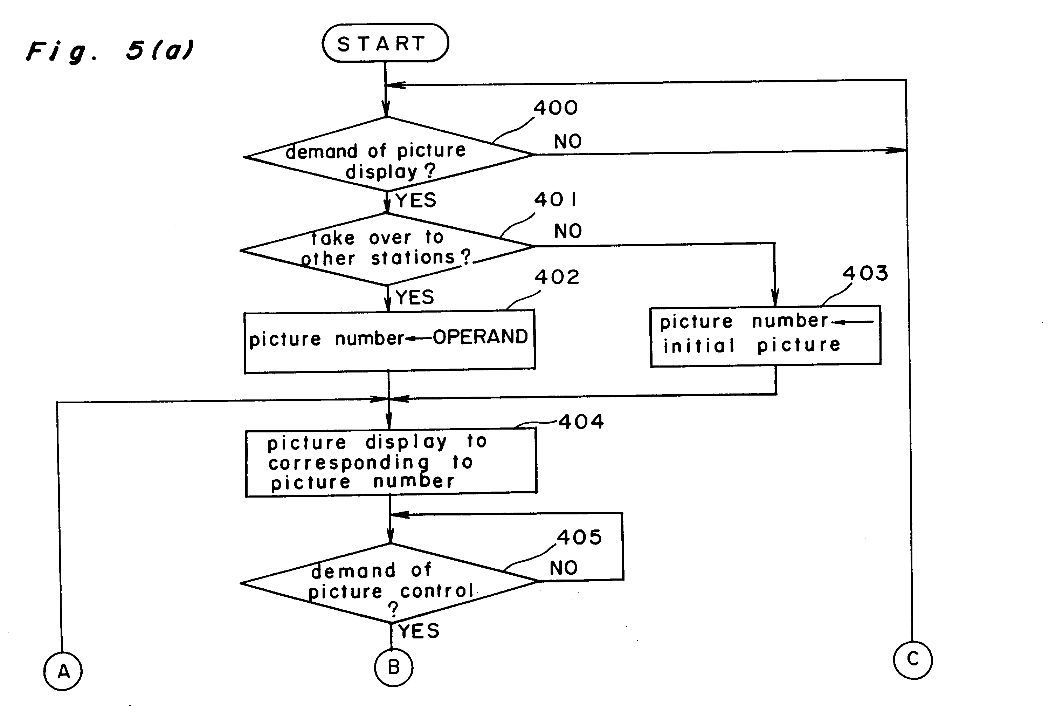

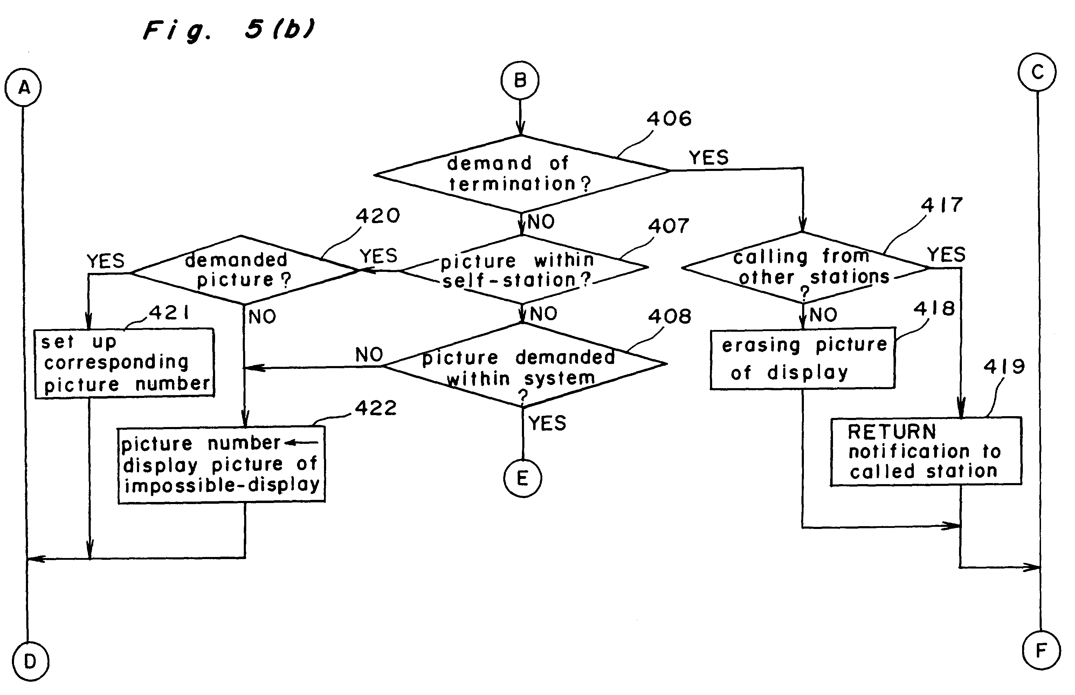

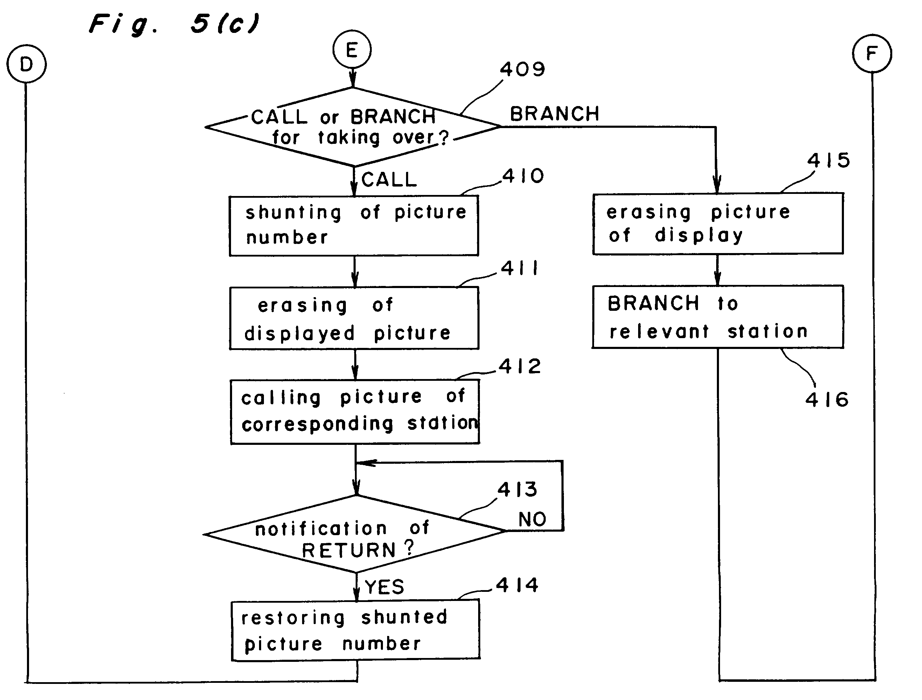

The present embodiment will be described in detail with reference to the processing flow chart of Fig. 5.

The program of the processing contents to be described hereinafter is accommodated in the ROM 211 of the respective stations described in Fig. 2, the processings are executed with the use of the RAM212, the address control means 223, the picture item control means 224 by the central processing apparatus 210. The processing routine shown in Fig. 5 is always executed, is processed in accordance with the demand of the user inputted from the demand input means 115.

At first, at the first step 400, it is decided whether or not the demand of the picture display has been inputted with respect to the station. The demands of the picture display are effected in a case where the user inputs from the demand input means 115, a case where the demand is inputted from the other station by way of the information transmission path 100, and a case where the central processing apparatus 210 effects its spontaneous generation within the self-station. When the demand of the picture display is not inputted, the step 400 is executed again. When the demand of the picture display is inputted, the step advances to the step 401.

At the step 401, it is decided whether or not the picture display demand has been taken over from the other station by way of the information transmission path 100. The step advances to the step 402 when the picture display has been effected by the demand from the other station. The step advances to the step 403 when the demand is not one from the other station, namely, when the demand is one, by the user, inputted from the demand input means 115, and when the demand is a spontaneous one from the central processing apparatus 210 within the self-station.

At the step 402, the numeral specified with the operand which is accompanied by the command transmitted from the other station by way of the information transmission path 100 into the picture numeral accommodating means 220 for accommodating the picture numeral of the picture to be displayed is accommodated.

At the step 403, the picture numeral of the initial picture is accommodated in the picture numeral accommodating means 220 for accommodating the picture numeral of the picture to be displayed.

At the step 404, the picture data of the picture is read from the picture data accommodating means 221 with reference to the picture numeral of the picture-to- be-displayed accommodated in the picture numeral accommodating means 220 so as to display it on the picture display means 114. When the station which is executing the processing step is a station which does not have the picture display means 114, the picture data is transferred by way of the information transmission path 100 with respect to the station having the picture display means 114 so as to display it by the picture display means 114 of the station having the picture display means 114.

At the step 405, it is decided whether or not the demand, which requires the next picture to be displayed, of the picture displaying at present has been inputted from the demand input means 115. When the next picture display demand is not made, the step 405 is executed again. When the demand is inputted, the step advances to the step 406.

At the step 406, it is decided whether or not the demand inputted at the step 405 is the picture display end demand. If it is end demand, the step advances to the step 417. If it is not the end demand, the step advances to the step 407.

At the step 407, it is decided whether or not the next picture demanded from the user is a picture within the self-station or a picture the other station controls. When it is a picture the other station controls, it is necessary to take over the picture control with respect to the station. When the picture within the self-station is demanded, as a result of the decision, the step advances to the step 420. When the picture the other station controls is demanded, the step advances to the step 408.

At the step 408, it is checked whether or not the picture demanded at the step 405 stays within the system. The decision is made with reference to the contents thereof as to what picture exists within the system as the registration is effected within the address control means 223 and the picture item control means 224 by the procedure shown previously in the embodiment of the present invention of the claim 1. When it has been decided that the demanded picture exists within the system, the step advances to the step 409. When it has been decided that the demanded picture does not exit, the step advances to the step 422.

At the step 409, it is decided whether or not the hand-over operation of the control right of the picture by the "BRANCH notification" is adopted, or the hand-over operation of it by the "CALL notification" with respect to the station having the picture demanded at the step 405. The hand-over by the "BRANCH notification" is of the picture displaying method shown in the embodiment of the present invention in the claim 2, and the hand-over by the "CALL notification" is of the picture displaying method shown in the embodiment of the present invention in the claim 3. As the hand-over by the "BRANCH notification" or the hand-over by the "CALL notification" is decided by the relation between the contents of the picture being displayed at present and the contents of the picture to be displayed next, the algorithm for deciding which hand-over method is adopted is not defined in particular in the present invention. The step advances to the step 415 when the hand-over by the "BRANCH notification" is adopted. When the hand-over by the "CALL notification" is adopted, the step advances to the step 410.

At the step 410, as it was decided that the hand-over by the "CALL notification" is used at the step 409, the picture number being displayed at present is shunted to the picture numeral shunting means 222 so as to advance to the next step 411.

At the step 411, the picture displaying at present is erased and advances to the next step 412.

At the step 412, the "CALL notification" with the picture numeral corresponding to the demanded picture being added as an operand is transmitted by way the information transmission path 100 with respect to the station having the picture demanded by the user. At a time point when the "CALL notification" has been transferred, the picture control right is handed over to the corresponding station from the self-station.

The step 13 waits for the "RETURN notification" to be sent back from the station where the control right of the picture has been handed over at the step 412. The step 413 is repeatedly executed while the "RETURN notification" comes and the step advances to the next step 414 at a time point when the "RETURN notification" has come.

At the step 414, the control right of the picture is handed over to the self-station again, so that the picture numeral shunted to the picture numeral shunting means 222 is restored at the step 410 so as to return to the step 404 for displaying the picture. The step advances to the step 415 in a case where the hand-over by the "BRANCH notification" is adopted at the step 409. At the step 415, the picture displaying at present as at the step 410 is erased so as to advance to the step 416.

At the step 416, the "BRANCH notification" with the picture numeral corresponding to the demanded picture being added as an operand is transmitted by way the information transmission path 100 with respect to the station having the picture demanded by the user the step 405. At a time point when the "BRANCH notification" has been transferred, the picture control right is handed over to the corresponding station from the self-station. As the self-station completes all the picture display processings, the step returns step 400 waiting for the next picture display demand to be inputted.

When the contents of the picture control demand inputted from the user at the step 405 has been decided to be the end demand at the step 406, the step advance to the step 417. The self-station decides at present whether or not the picture control right is handed over by the "CALL notification" from the other station. When it has been decided that the picture control right has been handed over by the "CALL notification" from the other station, the step advances to the step 418. When the picture control right is handed over by the the "CALL notification", the step advances to the step 419.

At the step 418, the picture displaying at present is erased. As all the picture display processings are completed as the station at this time point, the step returns to the step 400 waiting for the next picture display demand to be inputted.

At the step 419, all the picture display processings as the station are completed, and the control right of the picture is handed over by the "CALL notification" from the other station at present. The "RETURN notification " for returning the control right with respect to the former station where the control right of the picture has been handed over by the "CALL notification" to the station is transferred by way of the information transmission path 100. As the station has all the picture display processings finished at a time point when the processing for transferring the "RETURN notification" has been executed, the step returns to the step waiting for the next picture display demand to be inputted.

When the content of the picture control demand inputted from the user at the step 405 has been decided at the step 407 to be the picture being retained within the self-station, the step advances to the step 420 so as to decide whether or not the demanded picture exists within the self-station by the step 407 with reference to the picture data accommodating means 221. When the corresponding picture exists in the picture data accommodating means 221, the step advances to step 421. When it does not exist, the step advances to the step 422.

At the step 421, the picture numeral of the picture demanded by the user at the step 405 is accommodated in the picture numeral accommodating means 220, and thereafter, the step advances to the step 404 for displaying the picture corresponding to the picture numeral.

At the step 422, the picture numeral corresponding to the display picture for displaying to the effect that the picture demanded at the step 405 is impossible to display has been accommodated in the picture numeral accommodating means 220, and thereafter, the step advances to the step 404 for displaying the picture corresponding the picture numeral.

## Claims

1. Method for picture displaying by use of an audio video system comprising a communication processing means (111, 200) connected with an information communication system to be composed of a plurality of stations (110, 120, 130) connected with one information transmission path (100) for data communication and adapted to effect the data communication with sequential frames (1110) through the information transmission path (100), a frame decoding means (202) for decoding the contents of the frames (1110) received by the communication processing means (111, 200), a frame generating means (201) for constructing the frames to be sent out onto the information transmission path (100) by the communication processing means (111, 200), a central processing apparatus (210) for processing all the processing steps by a software, a memory apparatus (211, 212) to be used when a program of the processing steps by the software is executed, a picture data accomodating means (221) for accommodating the various types of information to be displayed on the picture, an address accommodating means (223) for accommodating the addresses of the other stations (110, 120, 130) connected with the information transmission path (100) when necessary,
the processing steps being composed of a step (301) of making an inquiry as to whether the picture display data exist or not with respect to all the stations (110, 120, 130) connected with the information transmission path (100), a step (302) of storing an address of a station (110, 120, 130) which replies that the picture display data exists, a step (303) of making an inquiry as to the picture contents with respect to the station replying that the picture display data exists and a step (304) of registering the picture contents replied with respect to the inquiry.

2. Method according to claim 1, for picture displaying by use of an audio video system further comprising a picture display means (114) connected with the information communication system to be composed of a plurality of stations (110, 120, 130) connected with the one system of information transmission path (100) for data communication and adapted to be common to all the stations (110, 120, 130) connected with information transmission path (100), a demand input means common to all the stations (110, 120, 130) connected with the information transmission path (100), a display picture numeral accommodating means (220) for accommodating the picture numerals of the pictures to be displayed, and
a station (110) with picture display functions attached to it, which has a processing step of sending an operand information for specifying the display start from what picture of the station B with respect to the station B retaining the corresponding picture from among the other stations (110, 120, 130) connected onto the information transmission path (100) when the user has specified the picture next to the picture being displayed at present, also, of sending a picture display transfer notification ("BRANCH notification") for taking over the picture display control right, and a station with picture display functions attached to it, which has a step of obtaining a control right of the picture display when the BRANCH notification has been received from the station A with the function similar to that of the station B being provided so as to display first the picture of the picture numeral specified with the operand of the BRANCH notification, thereafter completing all the picture displays by the demand from the user after the displaying operation of the picture demanded from the user.

3. Method according to claim 1, for picture displaying by use of an audio video system further comprising a picture display means (114) connected with the information communication system to be composed of a plurality of stations (110, 120, 130) connected with the one system of information transmission path (100) for data communication and adapted to be common to all the stations (110, 120, 130) connected with the information transmission path (100), a demand input means (115) common to all the stations (110, 120, 130) connected with the information transmission path (100),
a display picture numeral accommodating means (220) for accommodating the picture numerals of the pictures to be displayed, and
a station (110) with picture display functions attached to it, which has a processing step of sending a picture display transfer notification (CALL notification) that takes over the picture display control right, together with the operand information for specifying the display start from what picture of the station B with respect to the station B that retains the corresponding picture from among the other stations (110, 120, 130) connected onto the information transmission path (100) after the picture numeral being displayed at present has been shunted into a picture numeral shunting means (222) when the user has been specified the picture next to the picture being displayed at present, and has a step of returning the picture numeral to the picture numeral accommodating region from the picture numeral shunting means (221), at a stage where the RETURN notification notifying that the picture display control right will return from the station B to the station A has been received, so as to display the previous picture, and a station with picture display functions attached to it, which has a step of obtaining the control right of the picture display, when the CALL notification from the station A has been received with the function similar to that of the station B being provided, so as to display, first, the picture of the picture numeral specified with the operand of the CALL notification, thereafter sending the RETURN notification to the station A when the picture display the station B retains has been completed after the picture demanded by the user was displayed so as to return the control right of the picture display to the original.

4. Method according to claim 1, for picture displaying by use of an audio video system further comprising a picture display means (114) connected with the information communication system to be composed of a plurality of stations (110, 120, 130) connected with the one system of information transmission path (100) for data communication and adapted to be common to all the stations (110, 120, 130) connected with the information transmission path (100), a demand input means (115) common to all the stations (110, 120, 130) connected with the information transmission path (100), an information display means for displaying the information on the picture, a display picture numeral accommodating means (220) for accommodating the picture numerals of the picture to be displayed, an input means for inputting the information for the specification of the next operations and so on by the user,
the processing steps (400) comprising a decision step 1 for deciding whether the processing program has been started by the requirement from within the self-station or by the picture transfer from the other station when it has been started, a step of accommodating into the picture numeral accommodating means (220) the contents of the operand transferred from the other station when the starting operation has been effected by the picture transfer from the other station at the decision step 1, a step (404) of displaying the picture corresponding to the picture numeral which is accommodated in the picture numeral accommodating means (220), a step of waiting until the requirement for the next processing is inputted, a decision step 2 for deciding whether or not the requirement for the next processing is a picture display end requirement when it has been inputted, a decision step 3 for deciding whether or not the next picture to be displayed is a picture existing within the self-station when it has been decided not to be the end requirement at the decision step 2, a decision step 4 for judging whether or not a required picture exists within the other station connected with the information transfer path when it has been decided not to exist within the self-station at the decision step 3, a decision step 5 for deciding whether the transfer of the picture display processing with respect to the corresponding station is effected with CALL or BRANCH so as to display the required picture when it has been decided that the picture required at the decision step 4 exists, a step of comparing the picture numeral being displayed at present with picture numeral shunting means (222) when it has been decided that it is effected with the CALL at the decision step 5, a step of erasing the picture displaying at present, a step for transferring the CALL notification with the picture numeral to be displayed at first provided on it with respect to a station for delivering the display processing of the picture to be displayed next, a step of waiting for the reception of the RETURN notification which means returning of a right of the picture display processing again from the station after the right of the picture display processing has been delivered to the other station by the CALL notification, a step of returning to a step of restoring the picture numeral which has been shunted to the picture numeral shunting means (222) to the picture numeral accommodating means (220) when the RETURN notification has been received so as to display the corresponding picture to the picture numeral, a decision step 7 of deciding whether or not it is in the condition of the CALL from the other station when it has been decided that the requirement inputted at the decision step 2 is the picture display end requirement, a step of transferring the RETURN notification to the station calling when it has been decided that it is in the condition of the CALL at the decision step 7 so as to complete the processing, a step of erasing the picture being displayed at present when it has been decided that it is not in the condition of CALL at the decision step 7 so as to complete the processing, a decision step 6 of deciding whether or not the picture required exists when it has been decided that it exists within the self-station at the decisions step 3, a step of returning to a step of accommodating the corresponding picture numeral in the picture numeral accommodating means (220) when it has been decided that it exists at the decision step 6 so as to display the picture corresponding to the picture numeral, a step of returning to a step of accommodating in the picture numeral accommodating means (220) the picture numeral of the picture displaying to the effect that the picture required is impossible to display when it has been decided that the corresponding picture does not exist at the decision step 6 so as to display the picture corresponding to the picture numeral, a step of returning to a step of accommodating in the picture numeral accommodating means (220) the picture numeral of the picture displaying to the effect that the picture required is impossible to display when the picture required at the decision step 4 does not exist even within any station connected with the information transmission path so as to display the picture corresponding to the picture numeral, a step of erasing the picture being displayed at present when it has been decided that it is effected in the BRANCH at the decision step 5, and a step of transferring the BRANCH notification having as the operand the picture numeral to be displayed first with respect to the station for delivering the display processing of the picture to be displayed net.

## Patentansprüche

1. Bildanzeigeverfahren durch Verwendung eines Audio/Video-Systems, mit einer Kommunikationsverarbeitungseinrichtung (111, 200), welche an ein Informationskommunikationssystem angeschlossen ist, das aus mehreren Stationen (110, 120, 130) zu bilden ist, die an einen Informationsübertragungspfad (100) zur Datenkommunikation angeschlossen sind und ausgebildet sind zum Ausführen der Datenkommunikation mit sequentiellen Rahmen (1110) durch den Informationsübertragungspfad (100), einer Rahmendekodierungseinrichtung (202) zum Dekodieren der Inhalte der Rahmen (1110), welche durch die Kommunikationsverarbeitungseinrichtung (111, 200) empfangen werden, einer Rahmenerzeugungseinrichtung (201) zum Bilden der durch die Kommunikationsverarbeitungseinrichtung (111, 200) auf dem Übertragungspfad (100) zu sendenden Rahmen, einer zentralen Verarbeitungseinrichtung (210) zum Verarbeiten sämtlicher Verarbeitungsschritte durch eine Software, einer Speichereinrichtung (211, 212), die verwendet wird, wenn ein Programm der Verarbeitungsschritte durch die Software ausgeführt wird, einer Bilddatenerfassungseinrichtung (221) zum Erfassen der in dem Bild anzuzeigenden verschiedenen Informationsarten, einer Adreßerfassungseinrichtung (223) zum Erfassen der Adressen der anderen an den Informationsübertragungspfad (100) angeschlossenen Stationen (110, 120, 130), falls erforderlich,
wobei die Verarbeitungsschritte gebildet sind aus einem Schritt (301), der eine Anfrage an alle Stationen (110, 120, 130), die an den Informationsübertragungspfad (100) angeschlossen sind, ausführt, ob die Bildanzeigedaten vorhanden sind oder nicht, einem Schritt (302) zum Speichern einer Adresse einer Station (110, 120, 130), welche erwidert, daß die Bildanzeigedaten vorhanden sind, einem Schritt (303) zum Ausführen einer Anfrage nach dem Bildinhalt an die Station, die erwidert, daß Bildanzeigedaten existieren, und einem Schritt (304) der Registrierung der auf die Anfrage hin erwiderten Bildinhalte.

2. Verfahren nach Anspruch 1 für eine Bildanzeige durch Verwendung eines AudioNideo-Systems, mit einer Bildanzeigevorrichtung (114), welche an das Informationskommunikationssystem angeschlossen ist, das aus mehreren Stationen (110, 120, 130) zu bilden ist, die an das eine System des Informationsübertragungspfades (100) zur Datenkommunikation angeschlossen sind, und so ausgebildet ist, daß es für alle an den Informationsübertragungspfad (100) angeschlossenen Stationen (110, 120, 130) gemeinsam vorhanden ist, einer für alle an den Informationsübertragungspfad (100) angeschlossenen Stationen (110, 120, 130) gemeinsam vorhandenen Anforderungseingabeeinrichtung, einer Anzeigebildnummern-Erfassungseinrichtung (220) zum Erfassen der Bildnummern der anzuzeigenden Bilder, und einer ihr zugeordneten Station (110) mit Bildanzeigefunktionen, welche einen Verarbeitungsschritt aufweist, in dem eine Operandeninformation zum Bestimmen des Anzeigebeginns gesendet wird, von dem an ein Bild der Station B, bezogen auf die Station B, die das entsprechende Bild von den an den Informationsübertragungspfad (100) angeschlossenen Stationen (110, 120, 130) enthält, wenn der Bediener das dem momentan angezeigten Bild nachfolgende Bild bestimmt hat, und ebenso zum Senden einer Bildanzeigeübergangsmitteilung ("BRANCH-Mitteilung") zum Übernehmen der Bildanzeigesteuerungsrechte, und einer ihr zugeordneten Station mit Bildanzeigefunktionen, welche einen Schritt aufweist, in dem ein Steuerungsrecht der Bildanzeige erhalten wird, wenn die BRANCH-Mitteilung von der Station A empfangen wurde, mit einer Funktion, die mit derjenigen der Station B vergleichbar ist, die vorgesehen ist, um zuerst das Bild mit der Bildnummer anzuzeigen, die mit dem Operanden der BRANCH-Mitteilung festgelegt ist, und danach alle von dem Bediener angeforderten Bildanzeigen nach der Anzeige des von dem Bediener angeforderten Bildes zu beenden.

3. Verfahren nach Anspruch 1 für eine Bild anzeige durch Verwendung eines AudioNideo-Systems, welches weiterhin eine Bildanzeigeeinrichtung (114) umfaßt, welche an das Informationskommunikationssystem angeschlossen ist, das aus mehreren Stationen (110, 120, 130) zu bilden ist, die an das eine System des Informationsübertragungspfades (100) zur Datenkommunikation angeschlossen sind, welches so ausgebildet ist, daß es für alle an den Informationsübertragungspfad (100) angeschlossenen Stationen (110, 120, 130) gemeinsam vorhanden ist, eine für alle an den Informationsübertragungspfad (100) angeschlossenen Stationen (110, 120, 130) gemeinsam vorhandene Anforderungseingabeeinrichtung (115),
eine Anzeigebildnummern-Erfassungseinrichtung (220) zum Erfassen der Bildnummern der anzuzeigenden Bilder, und
einer ihr zugeordneten Station (110) mit Bildanzeigefunktionen, welche einen Verarbeitungsschritt aufweist, in dem eine Bildanzeigeübertragungsmitteilung (CALL-Mitteilung) gesendet wird, welche das Bildanzeigesteuerungsrecht übernimmt, zusammen mit der Operandeninformation zum Bestimmen des Anzeigebeginns, von dem an das Bild von Station B, bezogen auf die Station B, welche das entsprechende Bild von den an den Informationsübertragungspfad (100) angeschlossenen Stationen (110, 120, 130) enthält, nachdem die momentan angezeigte Bildnummer in eine Bildnummern-Shunt-Einrichtung (222) verschoben wird, wenn der Bediener das nächste Bild nach dem momentan angezeigten Bild festgelegt hat, und einen Schritt aufweist, in dem die Bildnummer von der Bildnummern-Shunt-Einrichtung (221) in die Bildnummernerfassungsregion zurückgegeben wird, in einer Stufe, in welcher die RETURN-Mitteilung, die mitteilt, daß das Bildanzeigesteuerungsrecht von der Station B zu der Station A zurückkehrt, empfangen wurde, um das vorherige Bild anzuzeigen, und eine ihr zugeordnete Station mit Bildanzeigefunktionen, welche einen Schritt aufweist, in dem das Steuerungsrecht für die Bildanzeige erhalten wird, wenn die CALL-Mitteilung von der Station A empfangen wurde, mit der Funktion, die derjenigen, welche für die Station B vorgesehen ist, gleicht, um zuerst das Bild mit der im Operanden der CALL-Mitteilung angegebenen Bildnummer anzuzeigen, danach die RETURN-Mitteilung zu der Station A zu senden, wenn die Bildanzeige, welche die Station B enthält, beendet ist, nachdem das durch den Bediener aufgerufene Bild angezeigt wurde, um das Steuerungsrecht der Bildanzeige zu dem Original zurückzugeben.

4. Verfahren nach Anspruch 1 für eine Bildanzeige durch Verwendung eines AudioNideo-System, welches weiterhin eine Bildanzeigeeinrichtung (114) umfaßt, die aus mehreren an das eine System des Informationsübertragungspfades (100) zur Datenkommunikation angeschlossenen Stationen (110, 120, 130) zu bilden und so ausgebildet ist, daß sie für alle an den Informationsübertragungspfad (100) angeschlossenen Stationen (110, 120, 130) gemeinsam vorhanden ist, eine für alle an den Informationsübertragungspfad (100) angeschlossenen Stationen (110, 120, 130) gemeinsam vorhandene Anforderungseingabeeinrichtung (115), einer Informationsanzeigeeinrichtung zum Anzeigen der Information des Bildes, einer Anzeigebildnummernerfassungseinrichtung (220) zum Erfassen der Bildnummern der anzuzeigenden Bilder, einer Eingabeeinrichtung zum Eingeben der Information der Festlegung der nächsten Operationen, usw., durch den Bediener,
wobei die Verarbeitungsschritte (400) einen Entscheidungsschritt 1 zum Entscheiden umfassen, ob das Verarbeitungsprogramm durch das Erfordernis von derselben Station oder durch die Bildübertragung von der anderen Station aufgerufen wurde, wenn sie aufgerufen wurde, einen Schritt zum Erfassen des Inhalts des Operanden, der von der anderen Station übertragen wurde, in der Bildnummernerfassungseinrichtung (220), wenn die Aufrufoperation durch die Bildübertragung von der anderen Station in dem Entscheidungsschritt 1 bewirkt wurde, einen Schritt (404) zum Anzeigen des Bildes entsprechend der Bildnummer, welche in der Bildnummernerfassungseinrichtung (220) erfaßt wird, einen Schritt zum Warten, bis das Erfordernis für die nächste Verarbeitung eingegeben wird, einen Entscheidungsschritt 2 zum Entscheiden, ob das Erfordernis für die nächste Verarbeitung ein Bildanzeigeendeerfordernis ist oder nicht, wenn es eingegeben wurde, einen Entscheidungsschritt 3 zum Entscheiden, ob das nächste anzuzeigende Bild ein Bild ist, das innerhalb der gleichen Station vorhanden ist, wenn in dem Entscheidungsschritt 2 entschieden ist, daß es nicht die ENDE-Anforderung war, einen Entscheidungsschritt 4 zum Beurteilen, ob ein angefordertes Bild innerhalb der an den Informationsübertragungspfad angeschlossenen anderen Stationen existiert, wenn in Entscheidungsschritt 3 entschieden ist, daß es nicht in der gleichen Station vorhanden ist, einen Entscheidungsschritt 5 zum Entscheiden, ob die Übertragung der Bildanzeigeverarbeitung, bezogen auf die entsprechende Station, mit CALL oder BRANCH bewirkt wird, um das angeforderte Bild anzuzeigen, wenn in dem Entscheidungsschritt 4 entschieden wurde, daß das angeforderte Bild existiert, einen Schritt, in dem die momentan angezeigte Bildnummer mit der Bildnummern-Shunt-Einrichtung (222) verglichen wird, wenn in dem Entscheidungsschritt 5 entschieden wurde, daß es mit CALL ausgeführt wird, einen Schritt, in dem das momentan angezeigte Bild gelöscht wird, einen Schritt, in dem die CALL-Mitteilung mit der zuerst anzuzeigenden Bildnummer übertragen wird, die darin, bezogen auf eine Station zum Liefern der Anzeigeverarbeitung des als nächsten anzuzeigenden Bildes, vorgesehen ist, einen Schritt zum Warten auf den Empfang der RETURN-Mitteilung, welche die Rückgabe eines Rechtes der Bildanzeigeverarbeitung von der Station bedeutet, nachdem das Recht auf die Bildanzeigeverarbeitung durch die CALL-Mitteilung an die andere Station gegeben wurde, einen Schritt zum Zurückkehren zu einem Schritt zum Zurückführen der Bildnummer, welche zu der Bildnummern-Shunt-Einrichtung (222) verschoben wurde, in die Bildnummernerfassungseinrichtung (220), wenn die RETURN-Mitteilung empfangen wurde, um das der Bildnummer entsprechende Bild anzuzeigen, einen Entscheidungsschritt 7 zum Entscheiden, ob sie in dem Zustand des CALL von der anderen Station ist, oder nicht, wenn entschieden wurde, daß die in dem Entscheidungsschritt 2 eingegebene Anforderung die Bildanzeigeendeanforderung ist, einen Schritt zum Übertragen der RETURN-Mitteilung zu der rufenden Station, wenn in dem Entscheidungsschritt 7 entschieden wurde, daß sie in der CALL-Bedingung ist, um die Verarbeitung zu beenden, einen Schritt zum Löschen des momentan angezeigten Bildes, wenn in dem Entscheidungsschritt 7 entschieden wurde, daß sie nicht in dem CALL-Zustand ist, um die Verarbeitung zu beenden, einen Entscheidungsschritt 6 zum Entscheiden, ob das angeforderte Bild existiert oder nicht, wenn in dem Entscheidungsschritt 3 entschieden wurde, daß es innerhalb der gleichen Station existiert, ein Schritt zum Zurückkehren zu einem Schritt, in dem die entsprechende Bildnummer in der Bildnummernerfassungseinrichtung (220) erfaßt wird, wenn in dem Entscheidungsschritt 6 entschieden wird, daß es existiert, um das der Bildnummer entsprechende Bild anzuzeigen, einen Schritt zum Zurückgehen zu einem Schritt, in dem die Bildnummer des angezeigten Bildes in der Bildnummernerfassungseinrichtung (220) erfaßt wird, um zu bewirken, daß es unmöglich ist, das angeforderte Bild anzuzeigen, wenn in dem Entscheidungsschritt 6 entschieden wurde, daß das entsprechende Bild nicht existiert, um das der Bildnummer entsprechende Bild anzuzeigen, einen Schritt zum Zurückkehren zu einem Schritt zum Erfassen der Bildnummer des angezeigten Bildes in der Bildnummernerfassungseinrichtung (220), um zu bewirken, daß es unmöglich ist, das angeforderte Bild anzuzeigen, wenn das in dem Entscheidungsschritt 4 angeforderte Bild nicht exisistiert, auch innerhalb jeder an den Informationsübertragungspfad angeschlossenen Station, um das der Bildnummer entsprechende Bild anzuzeigen, einen Schritt zum Löschen des momentan angezeigten Bildes, wenn in dem Entscheidungsschritt 5 entschieden wurde, daß es in dem BRANCH bewirkt wird, und einen Schritt zum Übertragen der BRANCH-Mitteilung mit der als erstes anzuzeigenden Bildnummer als Operant, bezogen auf die Station zum Liefern der Anzeigeverarbeitung des noch angezeigten Bildes.

## Revendications

1. Procédé pour afficher des images en employant un système audio et vidéo comportant un moyen de traitement de communications (111, 200) connecté à un système de communication de l'information devant être composé d'une multitude de stations (110, 120, 130) connectées à un trajet de transmission de l'information (100) pour la communication de données et destiné à effectuer la communication de données avec des trames séquentielles (1110) par l'intermédiaire du trajet de transmission de l'information (100), un moyen de décodage de trame (202) afin de décoder les contenus des trames (1110) reçues par le moyen de traitement de communications (111, 200), un moyen générateur de trame (201) pour construire les trames à sortir sur le trajet de transmission de l'information (100) par le moyen de traitement de communications (111, 200), un appareil central de traitement (210) pour traiter toutes les étapes de traitement par un logiciel, un appareil à mémoire (211, 212) devant être utilisé lors de l'exécution d'un programme des étapes de traitement par le logiciel, un moyen de réception de données d'image (221) pour recevoir les divers types d'information à afficher sur l'image, un moyen de réception d'adresse (223) pour recevoir les adresses des autres stations (110, 120, 130) connectées au trajet de transmission de l'information (100) lorsque cela est nécessaire,
les étapes de traitement étant constituées d'une étape (301) consistant à faire une interrogation quant au fait que les données d'affichage d'image existent ou non en ce qui concerne toutes les stations (110, 120 130) connectées au trajet de transmission de l'information (100), d'une étape (302) consistant à stocker une adresse d'une station (110, 120, 130) qui répond que la donnée d'affichage d'image existe, une étape (303) consistant à faire une interrogation quant aux contenus de l'image en ce qui concerne la station répondant que la donnée d'affichage d'image existe et d'une étape (304) consistant à enregistrer les contenus d'image donnés en réponse à l'interrogation.

2. Procédé selon la revendication 1, pour afficher des images en employant un système audio et vidéo comportant en outre un moyen d'affichage d'image (114) connecté au système de communication de l'information devant être composé d'une multitude de stations (110, 120, 130) connectées à ce système du trajet de transmission de l'information (100) pour la communication de données et destiné à être commun à toutes les stations (110, 120, 130) connectées au trajet de transmission de l'information (100), un moyen d'entrée de demande commun à toutes les stations (110, 120, 130) connecté au trajet de transmission de l'information (100), un moyen de réception de chiffres d'image affichée (220) pour recevoir les numéros des images à afficher, et une station (110) avec des fonctions d'affichage d'image qui lui sont attachées, qui comporte une étape de traitement consistant à envoyer une information d'opérande pour spécifier le départ de l'affichage à partir du numéro d'image de la station B concernant la station B qui détient l'image correspondante parmi les autres stations (110, 120, 130) connectées au trajet de transmission de l'information (100) lorsque l'utilisateur a spécifié l'image suivant celle qui est actuellement affichée, de plus, consistant à envoyer une notification de transfert d'affichage d'image ("notification BRANCHEMENT") pour prendre directement en charge la commande de l'affichage de l'image, et une station avec des fonctions d'affichage d'image qui lui sont attachées, qui comporte une étape consistant à obtenir un droit de commande de l'affichage d'image lorsque la notification BRANCHEMENT a été reçue en provenance de la station A avec la fonction similaire à celle de la station B fournie de façon à afficher tout d'abord l'image du numéro d'image spécifié avec l'opérande de la notification BRANCHEMENT, ensuite l'étape consistant à achever tous les affichages d'image par la demande provenant de l'utilisateur après l'opération d'affichage de l'image demandée par l'utilisateur.

3. Procédé selon la revendication 1, pour afficher des images en employant un système audio et vidéo comportant en outre un moyen d'affichage d'image (114) connecté au système de communication de l'information devant être composé d'une multitude de stations (110, 120, 130) connectées au système du trajet de transmission de l'information (100) pour la communication de données et destiné à être commun à toutes les stations (110, 120, 130) connectées au trajet de transmission de l'information (100), un moyen d'entrée de demande (115) commun à toutes les stations (110, 120, 130) connecté au trajet de transmission de l'information (100),
un moyen de réception de numéro d'image à afficher (220) pour recevoir les numéros des images devant être affichées, et
une station (110) avec des fonctions d'affichage d'image qui lui sont attachées, qui comporte une étape de traitement consistant à envoyer une notification de transfert d'affichage d'image (notification APPEL) qui prend en charge le droit de commande de l'affichage d'image, en même temps que l'information d'opérande pour spécifier le départ de l'affichage de l'image de la station B concernant la station B qui détient l'image correspondante parmi les autres stations (110, 120, 130) connectées au trajet de transmission de l'information (100) après que le numéro de l'image actuellement affichée a été dérivé dans un moyen de dérivation de numéro d'image (222) lorsque l'utilisateur a spécifié l'image suivant l'image qui est actuellement affichée, et comporte une étape consistant à retourner le numéro d'image à la zone de réception de numéro d'image à partir du moyen de dérivation de numéro d'image (221), à un stade où la notification RETOUR notifiant que le droit de commander l'affichage d'image reviendra de la station B à la station A a été reçue, de manière à afficher l'image précédente, et une station avec des fonctions d'affichage d'image qui lui sont attachées, qui comporte une étape consistant à obtenir le droit de commande de l'affichage des images, lorsque la notification APPEL provenant de la station A a été reçue, la fonction similaire à celle de la station B étant fournie, de façon à afficher, en premier lieu, l'image du numéro d'image spécifié avec l'opérande de la notification APPEL, à envoyer ensuite la notification RETOUR à la station A lorsque l'affichage d'image que détient la station B a été achevé après que l'image demandée par l'utilisateur a été affichée de manière à renvoyer à l'original le droit de commande de l'affichage d'image.

4. Procédé selon la revendication 1, pour afficher des images en employant un système d'audio et de vidéo, comprenant en outre un moyen d'affichage d'image (114) connecté au système de communication de l'information devant être composé d'une multitude de stations (110, 120, 130) connectées au système du trajet de transmission de l'information (100) pour la communication de données et destiné à être commun à toutes les stations (110, 120, 130) connectées au trajet de transmission de l'information (100), un moyen d'entrée de demande (115) commun à toutes les stations (110, 120, 130) connecté au trajet de transmission de l'information (100), un moyen d'affichage d'information pour afficher l'information sur l'image, un moyen de réception de numéro d'image à afficher (220) pour recevoir les numéros de l'image à afficher, un moyen d'entrée pour entrer l'information pour la spécification des opérations suivantes, etc., par l'utilisateur,
les étapes de traitement (400) comprenant une étape de décision 1 afin de décider si le programme de traitement a été démarré par l'exigence provenant de la station même ou par la transfert d'image à partir de l'autre station lorsqu'elle a été démarrée, une étape consistant à recevoir dans le moyen de réception de numéro d'image (220) les contenus de l'opérande transférés à partir de l'autre station lorsque l'opération de démarrage a été effectuée par le transfert d'image à partir de l'autre station à l'étape de décision 1, une étape (404) consistant à afficher l'image correspondant au numéro d'image qui est reçu dans le moyen de réception de numéro d'image (220), une étape consistant à attendre jusqu'à ce que l'exigence pour le traitement suivant ait été entrée, une étape de décision 2 afin de décider si oui ou non l'exigence pour le traitement suivant est l'exigence de la fin de l'affichage d'image lorsqu'elle a été entrée, une étape de décision 3 afin de décider si oui ou non l'image suivante à afficher est une image existant dans la station même lorsqu'il a été décidé qu'elle n'est pas l'exigence de fin à l'état de décision 2, une étape de décision 4 afin de juger si oui ou non une image exigée existe dans l'autre station connectée au trajet de transfert de l'information lorsqu'il a été décidé qu'elle n'existe pas dans la station même à l'étape de décision 3, une étape de décision 5 afin de décider si oui ou non le transfert du traitement de l'affichage d'image concernant la station correspondante est effectué avec APPEL ou BRANCHEMENT de manière à afficher l'image requise lorsqu'il é été décidé que l'image requise à l'étape de décision 4 existe, une étape consistant à comparer le numéro d'image actuellement affiché avec le moyen de dérivation de numéro d'image (222) lorsqu'il a été décidé qu'il a été effectué avec l'APPEL à l'étape de décision 5, une étape consistant à effacer le présent affichage d'image, une étape consistant à transférer la notification APPEL avec le numéro d'image à afficher en premier fourni sur elle concernant une station pour délivrer le traitement d'affichage de l'image à afficher ensuite, une étape consistant à attendre la réception de la notification RETOUR qui signifie le retour d'un droit du traitement d'affichage d'image de nouveau à partir de la station après que le droit de traitement d'affichage d'image a été délivré à l'autre station par la notification APPEL, une étape consistant à revenir à une étape de rétablissement du numéro d'image qui a été dérivé par le moyen de dérivation de numéro d'image (222) vers le moyen de réception de numéro d'image (220) lorsque la notification RETOUR a été reçue de manière à afficher l'image correspondant au numéro d'image, une étape de décision 7 afin de décider si oui ou non on est dans le cas de l'APPEL provenant de l'autre station lorsqu'il a été décidé que l'exigence entrée à l'étape de décision 2 est l'exigence de fin d'affichage d'image, une étape de transfert de la notification RETOUR à la station appelant lorsqu'il a été décidé qu'on est dans le cas de l'APPEL à l'étape de décision 7 de façon à achever le traitement, une étape consistant à effacer l'image actuellement affichée lorsqu'il a été décidé qu'on n'est pas dans le cas d'un APPEL à l'étape de décision 7 de manière à achever le traitement, une étape de décision 6 consistant à décider si oui ou non l'image requise existe lorsqu'il a été décidé qu'elle existe dans la station même à l'étape de décision 3, une étape de retour à une étape de réception du numéro d'image correspondant dans le moyen de réception de numéro d'image (220) lorsqu'il a été décidé qu'il existe à l'étape de décision 6 de manière à afficher l'image correspondant au numéro d'image, une étape consistant à retourner à une étape de réception dans le moyen de réception de numéro d'image (220) du numéro de l'image affichant l'effet que l'image requise est impossible à afficher lorsqu'il a été décidé que l'image correspondante n'existe pas à l'étape de décision 6 de manière à afficher l'image correspondant au numéro d'image, une étape consistant à retourner à une étape de réception dans le moyen de réception de numéro (220) le numéro de l'image affichant l'effet que l'image requise est impossible à afficher lorsque l'image requise à l'étape de décision 4 n'existe pas même dans une station quelconque connectée au trajet de transmission de l'information de manière à afficher l'image correspondant au numéro d'image, une étape consistant à effacer l'image présentement affichée lorsqu'il a été décidé qu'elle est effectuée dans le BRANCHEMENT à l'étape de décision 5, et une étape consistant à transférer la notification BRANCHEMENT ayant comme opérande le numéro d'image à afficher en premier concernant la station pour délivrer le traitement de l'image à afficher ensuite.
